(19) Europäisches Patentamt
European Patent Office
Office européen des brevets

(11) Publication number: **0 571 987 A2**

(12) **EUROPEAN PATENT APPLICATION**

(21) Application number: **93108523.7**

(22) Date of filing: **26.05.93**

(51) Int. Cl.5: **C08F 297/08**, C08F 210/02, C08F 4/602

(30) Priority: **26.05.92 JP 131181/92**

(43) Date of publication of application: **01.12.93 Bulletin 93/48**

(84) Designated Contracting States: **BE DE ES FR GB IT NL SE**

(71) Applicant: **IDEMITSU KOSAN COMPANY LIMITED**
**1-1, Marunouchi 3-chome**
**Chiyoda-ku**
**Tokyo(JP)**

(72) Inventor: **Akimaru, Tsutomu**
**c/o Idemitsu Petro. Co,Ltd1-1, Anesakikaigan**
**Ichihara-shi, Chiba-ken(JP)**
Inventor: **Nakacho, Kenji**
**c/0 Idemutsu Petro. Co.Ltd 1-1**
**Anesakikaigan**
**Ichihara-shi, Chiba-ken(JP)**

(74) Representative: **VOSSIUS & PARTNER**
**P.O. Box 86 07 67**
**D-81634 München (DE)**

(54) **mrocess for producing an ethylenic polymer composition.**

(57) There is disclosed a process for producing an ethylenic polymer composition having a density of 0.88 to 0.94 g/cm$^3$ and an intrinsic viscosity [$\eta$] of 1.5 to 6 dl/g which comprises the multistage polymerization steps of polymerizing ethlene or copolymerizing ethylene and other olefinic comonomer to form 30 to 70 wt% of (1) an ethylenic polymer having a density of 0.940 g/cm$^3$ or lower and an intrinsic viscosity [$\eta$] of 0.5 to 1.5 dl/g by the use of a catalyst comprising, as principal components, a transition metal compound, a compound capable of reacting with a transition metal compound to form an ionic complex and an organoaluminum compound; and copolymerizing ethylene and other olefinic comonomer to form 70 to 30 wt% of (2) an ethylenic polymer having a density not higher than that of the ethylenic polymer (1) and an intrinsic viscosity [$\eta$] higher than that of the ethylenic polymer (1) by the use of the same catalyst. The obtained composition is favorable in workability in melt molding, while maintaining the characteristics such as transparency, is minimized in the occurrence of melt fracture and is excellent in the appearance when made into a molding.

EP 0 571 987 A2

The present invention relates to a process for producing an ethylenic polymer composition. More particularly, it pertains to a process for efficiently producing, by two-stage polymerization step, an ethylenic polymer composition which is favorable in workability at the time of melt molding, while maintaining the characteristics such as transparency, is minimized in the occurrence of melt fracture and is excellent in the appearance when made into a molding.

As a process for producing an ethylenic polymer, there has heretofore been known the use of the Ziegler catalyst for olefinic monomer polymerization. However, the Ziegler catalyst for olefinic monomer polymerization has involved the problem that the use thereof results in the production of a polymer having not sufficiently narrow distribution of the molecular weight and composition, thereby making it impossible to drastically improve various physical properties such as transparency, though the workability of the polymer is not a particular problem.

In recent years, attention has been paid to a new Ziegler series catalyst for olefinic monomer polymerization which comprises as principal components a transition metal compound, a compound capable of reacting with a transition metal compound to form an ionic complex and an organoaluminum compound. The new Ziegler series catalyst is advantageous in that it can produce an olefinic polymer having a narrow composition-distribution and is excellent in transparency. Nevertheless the catalyst is disadvantageous in that the narrow distribution of molecular weight deteriorates the workability of the polymer thereby, the melt characteristics of the polymer need to be improved depending upon the purpose of use and besides, a molding from the polymer is liable to surface roughness or melt fracture with increasing molding rate.

Therefore, the object of the present invention is to provide a process for efficiently producing an ethylenic polymer which can preserve the characteristics such as transparency minimize the occurrence of melt fracture and be made into a molding with excellent appearance.

This object can be attained according to the present invention by the adoption of a specific two-stage polymerization step using a catalyst comprising, as principal components, a transition metal compound, a compound capable of reacting with a transition metal compound to form an ionic complex and an organoaluminum compound.

Thus, the present invention provides a process for producing an ethylenic polymer composition having a density of 0.88 to 0.94 g/cm$^3$ and an intrinsic viscosity[$\eta$] of 1.5 to 6 dl/g which comprises the multistage polymerization steps of polymerizing ethylene or copolymerizing ethylene and at least one olefinic comonomer other than ethylene to form (1) an ethylenic polymer having a density of 0.940 g/cm$^3$ or lower and an intrinsic viscosity [$\eta$] of 0.5 to 1.5 dl/g by the use of a catalyst comprising as principal components (A) a transition metal compound, (B) a compound capable of reacting with a transition metal compound to form an ionic complex and (C) an organoaluminum compound as polymerization step (a); and copolymerizing ethylene and at least one olefinic comonomer other than ethylene to form (2) an ethylenic polymer having a density not higher than that of the ethylenic polymer (1) and an intrinsic viscosity [$\eta$] higher than that of the ethylenic polymer (1) by the use of said catalyst as polymerization step (b), the proportion by weight of the ethylenic polymer (1) to the ethylenic polymer (2) in the ethylenic polymer composition being 30 to 70 : 70 to 30.

There is used in the process of the present invention a catalyst comprising, as principal components, (A) a transition metal compound, (B) a compound capable of reacting with a transition metal compound to form an ionic complex and (C) an organoaluminum compound.

As the transition metal compound of the component (A), there are usable the transition metal compounds each having a transition metal belonging to the group IVB, VB, VIB, VIIB or VIII of the Periodic Table, which is exemplified desirably by titanium, zirconium, hafnium, chromium, manganese, nickel, palladium and platinum and particularly desirably by zirconium, hafnium, titanium, nickel and palladium.

A variety of such transition metal compounds are available, among which are favorably usable the compound having a transiton metal belonging to the group IVB or VIII of the Periodic Table, especially a transition metal selected from those belonging to the group IVB thereof, that is, titanium, zirconium and hafnium. In particular, the preferable transition metal compounds are those represented by the general formula (I), (II), (III) or (IV) and derivatives thereof.

$CpMR^1_aR^2_bR^3_c$ (I)

$CP_2MR^1_aR^2_b$ (II)

$(Cp\text{-}A_e\text{-}Cp)MR^1_aR^2_b$ (III)

$MR^1{}_aR^2{}_bR^3{}_dR^4{}_d$ (IV)

wherein M is a transition metal belonging to the group IVB of the Periodic Table such as a Ti atom, Zr atom or Hf atom; Cp is an unsaturated cyclic hydrocarbon radical or an unsaturated chain hydrocarbon radical such as cyclopentadienyl group substituted cyclopentadienyl group, indenyl group, substituted indenyl group, tetrahydroindenyl group, substituted tetrahydroindenyl group, fluorenyl group or substituted fluorenyl group; $R^1$, $R^2$, $R^3$ and $R^4$, independently of one another, are each a ligand such as a $\sigma$-bonding ligand, a chelating ligand and a Lewis base, specifically exemplified as a $\sigma$-bonding ligand by a hydrogen atom, an oxygen atom, a halogen atom, an alkyl group having 1 to 20 carbon atoms, an alkoxy group having 1 to 20 carbon atoms, an aryl group, an alkylaryl group, an arylalkyl group each having 6 to 20 carbon atoms, an acyloxy group having 1 to 20 carbon atoms, an allyl group, a substituted allyl group and a substituent containing a silicon atom and, as a chelating ligand, by an acetylacetonato group and a substituted acetylacetonato group; A is crosslinkage by covalent bond; a, b, c and d, independently of one another, are each an integer from 0 to 4; e is an integer from 0 to 6; at least two out of $R^1$, $R^2$, $R^3$ and $R^4$ may together form a ring; and when Cp has a substituent, the substituent is preferably an alkyl group having 1 to 20 carbon atoms.

Examples of the substituted cyclopentadienyl group in the above-mentioned formulae (I) to (III) include methylcyclopentadienyl group; ethylcyclopentadienyl group; isopropylcyclopentadienyl group; 1,2-dimethylcyclopentadienyl group; tetramethylcyclopentadienyl group; 1,3-dimethylcyclopentadienyl group; 1,2,3-trimethylcyclopentadienyl group; 1,2,4-trimethylcyclopentadienyl group; pentamethylcyclopentadienyl group and trimethylsilylcyclopentadienyl group. Specific examples of $R^1$, $R^2$ $R^3$ and $R^4$ in the aforesaid formulae (I) to (IV) include F, Cl, Br and I as halogen atom; methyl, ethyl, n-propyl, isopropyl, n-butyl, octyl and 2-ethylhexyl group as alkyl group having 1 to 20 carbon atoms; methoxy, ethoxy, propoxy, butoxy and phenoxy group as alkoxy group having 1 to 20 carbon atoms; phenyl, tolyl, xylyl and benzyl group as aryl, alkylaryl or arylalkyl group each having 6 to 20 carbon atoms; heptadecylcarbonyloxy group as acyloxy group having 1 to 20 carbon atoms; trimethylsilyl and (trimethylsilyl)methyl group as substituent containing silicon atom; as Lewis base, ethers such as dimethyl ether, diethyl ether and tetrahydrofuran; thioethers such as tetrahydrothiophene; esters such as ethylbenzoate; nitriles such as acetonitrile and benzonitrile; amines such as trimethylamine, triethylamine, tributylamine, N,N-dimethyl-aniline, pyridine, 2,2'-bipyridine and phenanthroline; phosphine such as triethylphosphine and triphenylphosphine; unsaturated chain hydrocarbon such as ethylene, butadien, 1-pentene, isoprene, pentadiene, 1-hexene and derivatives thereof; unsaturated cyclic hydrocarbon such as benzene, toluene, xylene, cycloheptatriene, cyclooctadiene, cyclooctatriene, cyclooctatetraene and derivatives thereof. Examples of A, that is, crosslinkage by covalent bond in the above formula III include methylene, dimethylmethylene, ethylene 1,1'-cyclohexylene, dimethylsilylene, dimethylgermylene and dimethylstannylene crosslinkage.

Specific examples of the compound represented by the general formula (I) include pentamethylcyclopentadienyltrimethyltitanium, pentamethylcyclopentadienyltriphenyltitanium, pentamethylcyclopentadienyltribenzyltitanium, pentamethylcyclopentadienyltrichlorotitanium, pentamethylcyclopentadienyltrimethoxytitanium, cyclopentadienyltrimethoxytitanium, cyclopentadienyltriphenyltitanium, cyclopentadienyltribenzyltitanium, cyclopentadienyltrichlorotitanium, cyclopentadienyltrimethoxytitanium, cyclopentadienyldimethylmethoxytitanium, methylcyclopentadienyltrimethyltitanium methylcyclopentadienyltriphenyltitanium methylcyclopentadienyltribenzyltitanium, methylcyclopenadienyltrichlorotitanium, methylcyclopentadienyldimethylmethoxytitanium, dimethylcyclopentadienyltrichlorotitanium, trimethylcyclopentadienyltrichlorotitanium, trimethylcyclopetnadienyltrimethyltitanium and tetramethylcyclopentadienyltrichlorotitanium.

Specific examples of the compound represented by the general formula (II) include bis-(cyclopentadienyl)dimethyltitanium bis(cyclopentadienyl)diphenyltitanium; bis(cyclopentadienyl)diethyl titanium bis(cyclopentadienyl)dibenzyltitanium; bis(cyclopentadienyl)dimethoxy titanium bis-(cyclopentadienyl)dichlorotitanium; bis(cyclopentadienyl)dihydrotitanium bis(cyclopentadienyl)-monochlorohydridotitanium; bis(methylcyclopentadienyl)dimethyltitanium; bis(methylcyclopentadienyl)-dichlorotitanium; bis(methylcyclopentadienyl)dibenzyltitanium; bis(pentamethylcyclopentadienyl)-dimethyltitanium; bis(pentamethylcyclopentadienyl)dichlorotitanium; bis(pentamethylcyclopentadienyl)-dibenzylltitanium; bis(pentamethylcyclopentadienyl)chloromethyltitanium; bis(pentamethylcyclopentadienyl)-hydridomethyltitanium; (cyclopentadienyl)(pentamethylcyclopentadienyl)-dichlorotitanium; and any of the above-mentioned compounds in which titanium atom is replaced with a zirconium or a hafnium atom.

Specific examples of the compound represented by the formula (III) include ethylenebis(indenyl)-dimethyltitanium; ethylenebis(indenyl)dichlorotitanium; ethylenebis(tetrahydroindenyl)dimethyltitanium; ethylenebis(tetrahydroindenyl)dichlorotitanium; dimethylsilylenebis(cyclopentadienyl)dimethyltitanium;

dimethylsilylenebis(cyclopentadienyl)dichlorotitanium; isopropylidene(cyclopentadienyl)(9-fluorenyl)-dimethyltitanium; isopropylidene(cyclopentadienyl)(9-fluorenyl)dichlorotitanium; [phenyl(methyl)methylene]-(9-fluorenyl)(cyclopentadienyl)dimethyltitanium; diphenylmethylene(cyclopentadienyl)(9-fluorenyl)-dimethyltitanium; ethylene(9-fluorenyl)(cyclopentadienyl)dimethyltitanium; cyclohexalidene(9-fluorenyl)-(cyclopentadienyl)dimethyltitanium; cyclopentylidene(9-fluorenyl)(cyclopentadienyl)dimethyltitanium; cyclobutylidene(9-fluorenyl)(cyclopentadienyl)dimethyltitanium; dimethylsilylene(9-fluorenyl)-(cyclopentadienyl)dimethyltitanium; dimethylsilylenebis(2,3,5-trimethylcyclopentadienyl)dichlorotitanium; dimethylsilylenebis(2,3,5-trimethylcyclopentadienyl)dimethyltitanium; dimethylsilylenebis(indenyl)-dichlorotitanium; any of the above-mentioned compounds in which titanium atom is replaced with a zirconium or a hafnium atom.

Specific examples of the compound represented by the formula (IV) include tetramethyltitanium, tetrabenzyltitanium, tetramethoxytitanium, tetraethoxytitanium, tetrabutoxytitanium, titanium tetrachloride, titanium tetrabromide, butoxytitanium trichloride, butoxytitanium dichloride, bis(2,5-di-tert-butylphenoxy)-dimethyltitanium, bis(2,5-di-tert-butylphenoxy)titanium dichloride, titanium bis(acetylacetonato) and any of the above-mentioned compound in which titanium atom is replaced with a zirconium or a hafnium atom.

Favorably usable titanium compound as the component (A) among those represented by the general formula (III) is the titanium compound having a multidentate ligand in which two substituted or unsubsituted conjugated cyclopentadienyl groups (at least one being substituted cyclopentadienyl group) are bonded to one another via an element selected from the group IVA of the Periodic Table. By the use of such a compound, an isotactic polyolefin having enhanced isotacticity, a high molecular weight and a high melting point is obtained.

Examples of such compound include the compound represented by the general formula (V) and derivatives thereof

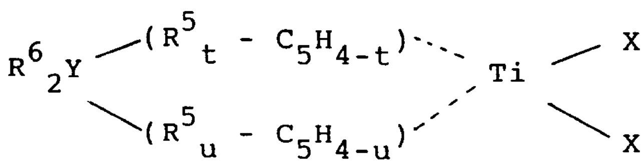

...(V)

wherein Y is a carbon atom, silicon atom, germanium atom or tin atom; $R^5{}_t$-$C_5H_{4-t}$ and $R^5{}_u$-$C_5H_{4-u}$ are each a substituted cyclopentadienyl group in which t and u are each an integer from 1 to 4; $R^5$ is a hydrogen atom, silyl group or hydrocarbon radical, and may be the same or different, provided that at least one cyclopentadienyl group has $R^5$ on at least one carbon atom adjacent to the carbon atom bonded to Y; $R^6$ is a hydrogen atom, an alkyl group having 1 to 20 carbon atoms, an aryl group, an alkylaryl group or an arylalkyl group each having 6 to 20 carbon atoms, and may be the same or different; X is a hydrogen atom, a halogen atom, an alkyl group having 1 to 20 carbon atoms, an aryl group, an alkylaryl group or an arylalkyl group each having 6 to 20 carbon atoms or an alkoxyl group having 1 to 20 carbon atoms and may be the same or different.

Examples of the substituted cyclopentadienyl group in the above-mentioned formulae (V) include methylcyclopentadienyl group; ethylcyclopentadienyl group; isopropylcyclopentadienyl group; 1,2-dimethylcyclopentadienyl group; 1,3-dimethylcyclopentadienyl group; 1,2,3-trimethylcyclopentadienyl group; and 1,2,4-trimethylcyclopentadienyl group.

Specific examples of X include F, Cl, Br and I as halogen atom; methyl, ethyl n-propyl, isopropyl, n-butyl, octyl and 2-ethylhexyl group as alkyl group having 1 to 20 carbon atoms; methoxy, ethoxy, propoxy, butoxy and phenoxy group as alkoxy group having 1 to 20 carbon atoms; phenyl, tolyl, xylyl and benzyl group as aryl, alkylaryl or arylalkyl group each having 6 to 20 carbon atoms.

Specific Examples of $R^6$ include methyl, ethyl, phenyl, tolyl, xylyl and benzyl group. Examples of the compounds represented by the general formula (V) include dimethylsilylenebis(2,3,5-trimethylcyclopentadienyl)titanium dichloride and the compound in which titanium atom is replaced with a zirconium atom or a hafnium atom.

As the component (B) of the catalyst in the present invention, there is employed a compound capable of reacting with a transition metal compound to form an ionic complex. The compound is not specifically limited insofar as it is capable of reacting with the (A) transition metal compound to form an ionic complex, but there is preferably used a compound especially a coordination compound comprising a cation and an anion in which a plurality of radicals are bonded to an element.

The compound comprising a cation and an anion in which a plurality of radicals are bonded to an element is exemplified by the compound represented by the general formula (VI) or (VII).

$$([L^1\text{-}R^7]^{k+})_p([M^3Z^1Z^2\text{---}Z^n]^{(n-m)-})_q \qquad (VI)$$

$$([L^2]^{k+})_p([M^4Z^1Z^2\text{---}Z^n]^{(n-m)-})_q \qquad (VII)$$

wherein $L^2$ is $M^5$, $R^8R^9M^6$ or $R^{10}{}_3C$ or $R^{11}M^6$; $L^1$ is a Lewis base; $M^3$ and $M^4$ are each an element selected from Groups VB, VIB, VIIB, VIII, IB, IIB, IIIA, IVA and VA preferably IIIA, IVA and VA of the Periodic Table; $M^5$ and $M^6$ are each an element selected from Groups IIIB, IVB, VB, VIB, VIIB, VIII, IA, IB, IIA, IIB and VIIA of the Periodic Table; $Z^1$ to $Z^n$ are each a hydrogen atom, a dialkylamino group, an alkoxy group having 1 to 20 carbon atoms, an aryloxy group having 6 to 20 carbon atoms, an alkyl group having 1 to 20 carbon atoms, an aryl group, an alkylaryl group or an arylalkyl group each having 6 to 20 carbon atoms, a halogen-substituted hydrocarbon radical having 1 to 20 carbon atoms, an acyloxy group having 1 to 20 carbon atoms, an organometalloid group or a halogen atom and at least two of them may combine with each other to form a ring; $R^7$ is a hydrogen atom, an alkyl group having 1 to 20 carbon atoms, an aryl group, an alkylaryl group or an arylalkyl group each having 6 to 20 carbon atoms; $R^8$ and $R^9$ are each a cyclopentadienyl group, a substituted cyclopentadienyl group, an indenyl group or a fluorenyl group; $R^{10}$ is an alkyl group having 1 to 20 carbon atoms, an aryl group, an alkylaryl group or an arylalkyl group; $R^{11}$ is a macrocyclic ligand such as tetraphenylporphyrin and phthalocyanine; m is the valency of each of $M^3$ and $M^4$, indicating an integer of 1 to 7; n is an integer of 2 to 8; k is the ion valency of each of $[L^1\text{-}R^7]$ and $[L^2]$, indicating an integer of 1 to 7; p is an integer of 1 or more; and $q = (p \times k)/(n - m)$.

Specific examples of the Lewis base represented by $L^1$ include amines such as ammonia, methylamine, aniline, dimethylamine, diethylamine, N-methylaniline, diphenylamine, trimethylamine, triethylamine, tri-n-butylamine, N,N-dimethylaniline, methyldiphenylamine, pyridine, p-bromo-N,N'-dimethylaniline and p-nitro-N,N-dimethylaniline; phosphines such as triethylphosphine, triphenylphosphine and diphenylphosphine; ethers such as dimethylether, diethyl ether, tetrahydrofuran and dioxane; thioethers such as diethyl thioether and tetrahydrothiophene; and esters such as ethylbenzoate.

Specific exmamples of $M^3$ and $M^4$ include B, Al, Si, P, As, Sb, etc. preferably B and P; those of $M^5$ include Li, Na, Ag, Cu, Br, I, etc.; and those of $M^6$ include Mn, Fe, Co, Ni, Zn, etc. Specific examples of $Z^1$ to $Z^n$ include dialkylamino group such as dimethylamino and diethylamino, alkoxy group having 1 to 20 carbon atoms such as methoxy, ethoxy and n-butoxy; aryloxy group having 6 to 20 carbon atoms such as phenoxy, 2,6-dimethylphenoxy and naphthyloxy; alkyl group having 1 to 20 carbon atoms such as methyl, ethyl, n-propyl, iso-propyl, n-butyl, n-octyl and 2-ethylhexyl; aryl group, alkylaryl group or arylalkyl group each having 6 to 20 carbon atoms such as phenyl, p-tolyl, benzyl, pentafluorophenyl, 4-tert-butylphenyl, 2,6-dimethylphenyl, 3,5-dimethylphenyl, 2,4-dimethylphenyl, and 2,3-dimethylphenyl; halogen-substituted hydrocarbon radical having 1 to 20 carbon atoms include p-fluorophenyl, 3,5-difluorophenyl, pentachlorophenyl, 3,4,5-trifluorophenyl, pentafluorophenyl and 3,5-di(trifluoromethyl)phenyl; halogen atoms such as F, Cl, Br and I and organometalloid group such as pentamethylantimony group, trimethylsilyl group, trimethylgermyl group, diphenylarsine group, dicyclohexylanitimony group and diphenylboron group. Specific examples of $R^7$ and $R^{10}$ are as previously enumerated. Specific examples of substitued cyclopentadienyl group in $R^8$ and $R^9$ include alkyl group-substituted cyclopentadienyl group such as methylcyclopentadienyl, butylcyclopentadienyl and pentamethylcyclopentadienyl, where the alkyl group has usually 1 to 6 carbon atoms and the number of the substituted alkyl groups are selected from the integers of 1 to 5.

The compound represented by the general formula (VI) or (VII) is preferably the compound in which $M^3$ or $M^4$ is boron, and enumerated, as preferably usable one of the general formula (VI) by triethylammonium tetraphenylborate, tri(n-butyl)ammonium tetraphenylborate, trimethylammonium tetraphenylborate, tetraethylammonium tetraphenylborate, methyltri(n-butyl)ammonium tetraphenylbroate, benzyltri(n-butyl)-ammonium tetraphenylborate, dimethyldiphenylammonium tetraphenylborate, methyltriphenylammonium tetraphenylborate, trimethylanilinium tetraphenylborate, methylpyridinium tetraphenylborate, benzylpyridinium tetraphenylborate, methyl(2-cyanopyridinium) tetraphenylborate, trimethylsulfonium tetraphenylborate, benzylmethylsulfonium tetraphenylborate, triethylammonium tetra(pentafluorophenyl)borate, triphenylammonium tetra(pentafluorophenyl)borate, tetrabutylammonium tetra(pentafluorophenyl)borate, tetraethylammonium tetra(pentafluorophenyl)borate, methyltri(n-butyl)ammonium tetra(pentafluorophenyl)-borate, benzyltri(n-butyl)ammonium tetra(pentafluorophenyl)borate, methyldiphenylammonium tetra-(pentafluorophenyl)borate, methyltriphenylammonium tetra(pentafluorophenyl)borate, dimethyldiphenylammonium tetra(pentafluorophenyl)borate, anilinium tetra(pentafluorophenyl)borate, methylanilinium tetra-

(pentafluorophenyl)borate, dimethylanilinium tetra(pentafluorophenyl)borate, trimethylanilinium tetra-(pentafluorophenyl)borate, dimethyl(m-nitroanilinium) tetra(pentafluorophenyl)borate, dimethyl(p-bromoanilinium) tetra(pentafluorophenyl)borate, pyridinium tetra(pentafluorophenyl)borate, p-cyanopyridinium tetra(pentafluorophenyl)borate, N-methylpyridinium tetra(pentafluorophenyl)borate, N-benzylpyridinium tetra(pentafluorophenyl)borate, o-cyano-N-methylpyridinium tetra(pentafluorophenyl)borate, p-cyano-N-methylpyridinium tetra(pentafluorophenyl)borate, p-cyano-N-benzylpyridinium tetra-(pentafluorophenyl)borate, trimethylsulfonium tetra(pentafluorophenyl)borate, benzyldimethylsulfonium tetra-(pentafluorophenyl)borate, tetraphenylphosphonium tetra(pentafluorophenyl)borate, dimethylanilinium tetra-(3,5-di-trifluoromethylphenyl)borate and triethylammonium hexafluoroarsenate.

Examples of the compound of the general formula (VII) include ferrocenium tetraphenylborate, silver tetraphenylborate, trityl tetraphenylborate, (tetraphenylporphyrin manganate) tetraphenylborate, ferrocenium tetra(pentafluorophenyl)borate, decamethylferrocenium tetra(pentafluorophenyl)borate, acetylferrocenium tetra(pentafluorophenyl)borate, formylferrocenium tetra(pentafluorophenyl)borate, cyanoferrocenium tetra-(pentafluorophenyl)borate, silver tetra(pentafluorophenyl)borate, trityl tetra(pentafluorophenyl)borate, lithium tetra(pentafluorophenyl)borate, sodium tetra(pentafluorophenyl)borate, (tetraphenylporphyrin manganate) tetra(pentafluorophenyl)borate, (tetraphenylporpyrinium chloride) tetra(pentafluorophenyl)borate, (tetraphenylporphyrin zincate) tetra(pentafluorophenyl)borate, silver tetrafluoroborate, silver hexafluoroarsenate and silver hexafluoroantimonate.

As the compound other than that represented by the general formula (VI) or (VII), there are usable, for example, tri(pentafluorophenyl)boron, tri[3,5-di(trifluoromethyl)phenyl] boron and triphenylboron.

Examples of the organoaluminum compound as the component (C) include the compound represented by the general formula (VIII)

$R^{12}{}_{r}AlQ_{3-k}$ (VIII)

wherein $R^{12}$ is a hydrocarbon radical such as alkyl group having 1 to 20, preferably 1 to 12 carbon atoms, alkenyl group or arylalkyl group, Q is a hydrogen atom, an alkoxy group having 1 to 20 carbon atoms or halogen atom, and r satisfies $1 \leq k \leq 3$; the chain aluminoxane represented by the general formula (IX)

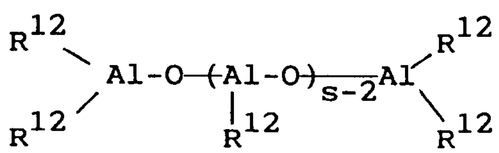

(IX)

wherein $R^{12}$ is as defined above and s is degree of polymerization indicating an integer usually ranging from 3 to 50, preferably 7 to 40; and the cyclic alkylaluminoxane represented by the general formula (X).

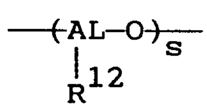

(X)

wherein $R^{12}$ and s areas defined above.

Among the compounds represented by any of the above-mentioned formulae (VIII), (IX) and (X), are desirable an alkyl group-containing aluminum compound having at least one alkyl group, especially branched alkyl group, having at least 3 carbon atoms and an aluminoxane, and are particularly desirable triisobutylaluminum and an aluminoxane having 7 or more degree of polymerization, the use of which alone or in combination with one another can afford a high catalytic activity.

A process for producing the above-mentioned aluminoxane is exemplified by but not limited to a process in which an alkylaluminum is brought into contact with a condensation agent such as water. In addition, any of the publicly known method is available, which is exemplified by (1) a method in which an organoaluminum compound is dissolved in an organic solvent and then brought into contact with water, (2) a method in which an organoaluminum compound is first added to the reaction system at the time of polymerization and thereafter water is added thereto, (3) a method in which an organoaluminum compound is reacted with the water of crystallization contained in metallic salt and (4) a method in which a tetraalkyldialuminoxane is reacted with a trialkylaluminum and further with water.

Specific examples of the compound represented by the general formula (VIII) include trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride and ethylaluminum sesquichloride.

The polymerization catalyst to be used in the present invention as described hereinbefore may be in any form such as (1) the catalyst prepared by adding each of the components (A), (B) and (C) separately to the reaction system; (2) the reaction product obtained by reacting in advance the components (A), (B) and (C) through contact among them; and the catalyst supported on a proper carrier.

The usable carrier is not specifically limited in its type, but may be an inorganic oxide carrier, an inorganic carrier other than oxide or an organic carrier and particularly desirably an inorganic oxide carrier or an inorganic carrier other than oxide.

Specific examples of the inorganic oxide carrier include $SiO_2$, $Al_2O_3$, MgO, $ZrO_2$, $TiO_2$, $Fe_2O_3$, $B_2O_3$, CaO, ZnO BaO, $ThO_2$ and a mixture thereof such as silica/alumina, zeolite, ferrite and glass fiber, among which are particularly desirable $SiO_2$ and $Al_2O_3$. In addition, the above-mentioned inorganic oxide catalyst may contain a small amount of a carbonate, nitrate, sulfate or the like.

Other examples of the usable inorganic carrier other than oxide include a magnesium compound such as $MgCl_2$, $Mg(OC_2H_5)$, a complex thereof and an organomagnesium comound such as $MgR^{13}{}_xX^1{}_y$ wherein $R^{13}$ is an alkyl group having 1 to 20 carbon atoms, an alkoxy group having 1 to 20 carbon atoms or an aryl group having 6 to 20 carbon atoms; $X^1$ is a halogen atom or an alkyl group having 1 to 20 carbon atoms; x is 0 to 2; and y is 0 to 2.

Examples of the organic carrier include a polymer such as polystyrene, polyethylene, polypropylene, substituted polystyrene and polyarylate, starch and carbon.

The carrier to be employed varies in its properties depending upon the type and preparation method, but has an average particle size in the range of usually 1 to 300 $\mu$m, desirably 10 to 200 $\mu$m, more desirably 20 to 100 $\mu$m.

Undersized particles unfavorable increase fine powders in the polymer, whereas oversized particles unfavorably increase coarse grains therein, causing decrease in bulk density and clogging of a hopper.

The specific surface area of the carrier is usually 1 to 1000 $m^2/g$, preferably 50 to 500 $m^2/g$, and the pore volume thereof is usually 0.1 to 5 $cm^3/g$, preferably 0.3 to 3 $cm^3/g$, which are determined from the volume of nitrogen adsorbed in accordance with BET method. (refer to Journal of American Chemical Society, vol 60, page 309, 1983). Any of the specific surface area and the pore volume that is outside the above-mentioned range can cause deterioration of the catalytic activity. The above-mentioned carrier is preferably calcined or fired at usually 150 to 1000 °C, preferably 200 to 800 °C prior to use.

With regard to the usage of each of the components in the aforestated case (1), that is, the separate addition of each component, it is desirable to set the component (A) at 0.0001 to 5, preferably 0.001 to 1 mmol/liter, the component (B) at 0.0001 to 5, preferably 0.001 to 1 mmol/liter, the component (C) at 0.01 to 500, preferably 0.05 to 100 mmol/liter expressed in terms of Al atom, (S)/(A) molar ratio at 0.01 to 100, preferably 0.5 to 10 and (C)/(A) molar ratio at 0.1 to 2000, preferably 5 to 1000.

In the aforesaid case (2) where the components (A), (B) and (C) are brought into contact with each other in an inert solvent in an atmosphere of an inert gas, it is desirable to set the component (A) at 0.01 to 100 mmol/liter, the component (B) at 0.01 to 100 mmol/liter and the component (C) at 0.1 to 1000 mmol/liter expressed in terms of Al atom. The resultant product is remarkably improved in its catalytic activity when the following relations are simultaneously satisfied

$0.5<[B]/[A]<5$

$0.5<[C]/[A]<500$ and

$0.1 \text{ mmol/liter}<[A]$

wherein [A],[B] and [C]are each molar concentration of the components A, B and C respectively in the contact field, provided that [C]is expressed in terms of Al atom.

A [B]/[A] ratio less than 0.5 results in failure to manifest the effect on the improvement in the catalytic activity, whereas that more than 5 leads to the wasteful consumption of the component (S). A [C]/[A] ratio less than 0.5 results in insufficient effect on the improvement in the catalytic activity, while that more than 500 leads to the wasteful consumption of the components (C) and a large amount of aluminum components remaining in the product polymer. A [A] less than 0.1 mmol/liter brings about a low rate of the contact reaction causing difficulty in sufficiently exerting the effect on the improvement in the catalytic activity.

In the process of the present invention, it is necessary to produce the ethylenic polymer composition in two stages including polymerization steps (a) and (b). In the step (a), ethylene is homopolymerized or copolymerized with other olefinic comonomer to produce an (1) ethylenic polymer having a density of 0.94 $g/cm^3$ or lower and an intrinsic viscosity[$\eta$] of 0.5 to 1.5 dl/g.

A density of the (1) ethylenic polymer higher than 0.94 g/cm$^3$ causes decrease in transparency and cold impact strength of the final product of the ethylenic polymer composition. An intrisic viscosity [$\eta$] of the (1) ethylenic polymer more than 1.5 dl/g results in failure to widen the molecular weight distribution to the extent effective for improving the moldability of the final product of the ethylenic polymer composition, whereas that less than 0.5 dl/g brings about deterioration of the mechanical properties of the composition.

In the step (b), ethylene is copolymerized with other olefinic comonomer to produce an (2) ethylenic copolymer having a density not higher than that of the (1) ethylenic polymer and an intrinsic viscosity [$\eta$] being higher than that of the (1) ethylenic polymer and in the range of 1 to 6 dl/g.

A density of the (2) ethylenic copolymer obtained in the step (b) that is higher than that of the (1) ethylenic polymer causes insufficient effect on the improvement in the mechanical properties such as cold impact strength. An intrinsic viscosity [$\eta$] of the (2) ethylenic copolymer more than 6 dl/g leads to difficulty in the compatibility with the (1) ethylenic polymer and deterioration of the physical properties of the final composition, whereas that less than 1 dl/g results in failure to widen the molecular weight distribution to the extent effective for improving the moldability of the final product of the ethylenic polymer composition.

The above-mentioned steps (a) and (b) may be put into practice in an arbitrary order, that is, the step (a) may precede the step (b), which is effected in the presence of the resultant (1) ethylenic polymer to form the (2) ethylenic copolymer or follow the step (b) in the presence of the resultant (2) ethylenic copolymer to form the (1) ethylenic polymer. At any rate, it is indispensable that both the steps be successively put into practice. In other words, the succeeding step must be carried out in the presence of the polymer produced in the preceding step.

In addition, it is indispensable that the ethylenic polymer composition thus obtained has an intrinsic viscosity [$\eta$] in the range of 1.5 to 6 dl/g and a density in the range of 0.88 to 0.94 g/cm$^3$ and also that the proportion of the (1) ethylenic polymer in the composition be in the range of 30 to 70:70 to 30, preferably of 30 to 70% by weight. A proportion thereof outside said range causes failure to effectively widen the molecular weight distribution of the composition, thus deteriorating the physical properties.

In view of the balance between the widening of the molecular weight distribution and the physical properties of the composition, the ratio (FR) of MI 21.6 as measured at 190 °C under 21.6 kg load to MI 2.16 as measured at 190 °C under 2.16 kg load is desirably in the range of 30 to 300, more desirably 50 to 200.

Examples of the olefinic comonomer other than ethylene include $\alpha$-olefin and non-conjugated diene. Examples of the $\alpha$-olefin include straight-chain monoolefin exemplified by propylene; 1-butene; 1-hexene; 1-octene; 1-nonene; 1-decene; 1-undecene; and 1-dodecene, branched monoolefin exemplified by 3-methylbutene-1; 3-methylpentene-1; 4-methylpentene-1; 2-ethylhexene-1; and 2,2,4-trimethylpentene-1 and monoolefin replaced with a benzene ring such as styrene.

Examples of the preferable non-conjugated diene include a straight chain or branched non-conjugated diene such as 1,5-hexadiene; 1,6-heptadiene; 1,7-octadiene; 1,8-nonadiene; 1,9-decadiene; 2,5-dimethyl-1,5-hexadiene; and 1,4-dimethyl-4-tert-butyl-2,6-heptadiene, polymer such as 1,5,9-decatriene and end-methylene series cyclic diene such as 5-vinyl-2-norbornene. Any of the above-exemplified olefinic comonomer may be used alone or in combination with at least one other olefin.

The polymerization method in the present invention is not specifically limited, but is usually any of slurry, gas-phase, bulk, solution or suspension polymerization method, etc., of which are preferable slurry polymerization method and gas-phase polymerization method.

The polymerization temperature is usually -100 to 250 °C, desirably -50 to 200 °C, particularly desirably 0 to 130 °C. Regarding the amount of the catalyst to be used based on the starting raw material, the raw monomer/the comonent (A) molar ratio or the raw monomer/the component (B) molar ratio is usually 1 to $10^8$, desirably 100 to $10^5$. The copolymerization time is usually 5 min. to 10 hours, desirably 10 min. to 5 hours. The polymerization pressure is 0 to 100 kg/cm$^2$G, desirably 0 to 30 kg/cm$^2$G.

The modification of the molecular weight of the final composition may be carried out by selecting the usage of each of the catalytic components, copolymerization temperature and the copolymerization atmosphere such as the presence of hydrogen.

The copolymerization solvent, when used, is not specifically limited but may be selected from aromatic hydrocarbons such as benzene, toluene, xylene and ethylbenzene; alicylic hydrocarbon such as cyclopentane, cyclohexane and methylcyclohexane; aliphatic hydrocarbons such as pentane, hexane, heptane and octane; and halogenated hydrocarbons such as chloroform and dichloromethane, alone or as combination of at least two of them. In addition, an olefinic monomer may be used as a solvent. The polymerization may be performed in the absence of a solvent.

In the process of the present invention, a preliminary polymerization may be carried out using the above-mentioned catalyst through the use of a conventional technique by bringing a small amount of an

olefin into contact with a solid catalyst component.

The olefin to be employed in the preliminary polymerizaiton is not specifically limited, but is exemplified by those same as the above such as ethylene, an olefin having 3 to 20 carbon atoms and a mixture thereof, preferably the olefin same as that to be used in the main polymerisation.

The preliminary polymerization is carried out at a temperature of usually -20 to 100 °C, desirably -10 to 70 °C, particularly desirably 0 to 50 °C, in the absence or presence of a solvent such as an inert hydrocarbon and an aliphatic hydrocarbon, an aromatic hydrocarbon and a monomer, particularly desirably an aliphatic hydrocarbon.

The preliminary polymerisation product has an intrinsic viscosity [$\eta$] as measured in decalin at 135 °C of desirably 0.2 dl/g or higher, particularly desirably 0.5 dl/g or higher. The ratio of the preliminary polymerization product to 1 mmol of the transition metal component in the catalyst is adjusted to desirably 1 to 10,000 g, particularly desirably 10 to 1000 g.

In summary, according to the process of the present invention, the ethylenic polymer composition which is favorable in workability at the time of melt molding, while maintaining the characteristics such as transparency, is minimized in the occurrence of melt fracture and is excellent in workability in melt molding and the appearance when made into a molding can be produced with ease. Also being excellent in various physical properties and melt characteristics, the above-obtained composition is favorably used for injection molding and extrusion molding in the industrial field typified by pipe manufacture.

In the following, the present invention will be described in more detail with reference to non-limitative examples and comparative examples.

## Preparation Example 1

Preparation of ferrocenium tetra(pentafluorophenyl)borate

3.7 g (20.0 mmol) of ferrocenen and 40 ml of conc. sulfuric acid were reacted at room temperature for 1 hour to produce a navy blue solution, which was poured in 1 liter of water with stirring to form a dark blue solution. Then the solution was added to 500 ml of aqueous solution of 20 mmol (13.7 g) of lithium tetra-(pentafluorophenyl)boron $Li[B(C_6F_5)_4]$. The resultant light blue precipitate was collected by filtration, washed with 500 ml of water 5 times and dried under reduced pressure to obtain 14.7 g of the objective ferrocenium tetra(pentafluorophenyl)borate $[Fe][B(C_6F_5)_4]$.

## Preparation Example 2

Synthesis of dimethylanilinium tetra(pentafluorophenyl)borate

Pentafluorophenyllithium which had been prepared from 152 mmol of bromopentafluorobenzene and 152 mmol of butyllithium was reacted with 45 mmol of trichloroboron in hexane to produce tri-(pentafluorophenyl)boron as white solid, 41 mmol of which was reacted with 41 mmol of pentafluorophenyllithium to produce lithium tetra(pentafluorophenyl)boron as white solid and isolate the same.

Then, 16 mmol of lithium tetra(pentafluorophenyl)boron was reacted with 16 mmol of dimethylaniline hydrochloride in water to obtain 11.4 mmol of dimethylanilinium tetra(pentafluorophenyl)borate ($[PhNMe_2H]$-$[B(C_6F_5)_4]$) as white solid. It was confirmed by $^1$H-NMR and $^{13}$C-NMR analysis that the product was the objective product.

## Example 1

A one (1) liter stainless steel-made autoclave which had been sufficiently dried and purged with nitrogen was charged with 350 ml of toluene and 62 ml of 1-octene, and the reaction system temperature was raised up to 60 °C. Then, in a 90 ml stainless steel-made vessel which had directly been connected to the autoclave were placed 50 ml of toluene, 0.2 mmol of triisobutylaluminum ($i\text{-}Bu_3Al$) as the component (C) of the catalyst, 0.01 mmol of ($[Fe][B(C_6F_5)_4]$) as the component (B) of the catalyst as prepared in Preparation Example 1 and 0.01 mmol of bis-cyclopentadienyldimethylzirconium ($Cp_2ZrMe_2$) as the component (A) of the catalyst to prepare the catalyst.

Thereafter, the system pressure was increased to 5 kg/cm$^2$G by introducing hydrogen, followed by the catalyst feeding to initiate polymerization reaction. the total pressure of the system was maintained at 5 kg/cm$^2$G by continuously introducing ethylene to proceed with polymerization reaction at 60 °C for 10 min. [Step (b)].

After depressurizing the reaction system, the temperature therein was again set at 60 ° C. Ethylene was continuously fed in the autoclave so as to maintain the total pressure of 10 $kg/cm^2G$ to proceed with polymerization reaction at 60 ° C for 30 min. [Step (a)].

The polymerizaiton reaction was arrested by adding a small amount of methanol to the system and the polymerization product was dried at 80 ° C under reduced pressure for 12 hours to afford an ethylenic copolymer in a yield of 165 g. The resultant polymer had an intrinsic viscosity [$\eta$] of 1.87 dl/g, a density of 0.913 $g/cm^3$ and FR, that is, an index of molecular weight distribution, of 85.

In addition, the polymer obtained in the above-mentioned step (b) in a yield of 66 g without step (b) had a [$\eta$] of 3.05 dl/g and a density of 0.906 $g/cm^3$. The conditions and results of the polymerisation are given in Table 1 to 3.

Examples 2 to 5 and Comparative Examples 1 to 2

The procedure in Example 1 was repeated except that the type and amount of each of the catalytic components (A), (B) and (C) were altered as given in Table 1 and the polymerisation conditions were altered as given in Table 2. Comparative Examples 1 and 2 indicate single stage polymerization. The results obtained are given in Table 3. In Table 1, $ZrBz_4$ and $Cp_2ZrCl_2$ denote tetrabenzylzirconium and biscyclopentadienyldichlororzirconium.

Table 1

| | Catalyst Component (A) | | Catalyst Component (B) | | Catalyst Component (C) | |
|---|---|---|---|---|---|---|
| | type | mmol | type | mmol | type | mmol |
| Example 1 | $Cp_2ZrMe_2$ | 0.01 | $[Fc][B(C_6F_5)_4]$ | 0.01 | $i\text{-}Bu_3Al$ | 0.2 |
| Example 2 | $ZrBz_4$ | 0.03 | $[Fc][B(C_6F_5)_4]$ | 0.03 | $i\text{-}Bu_3Al$ | 0.6 |
| Example 3 | $ZrBz_4$ | 0.02 | $[PhNMe_2H][B(C_6F_5)_4]$ | 0.03 | $i\text{-}Bu_3Al$ | 3.0 |
| Example 4 | $Cp_2ZrCl_2$ | 0.006 | $[PhNMe_2H][B(C_6F_5)_4]$ | 0.01 | $i\text{-}Bu_3Al$ | 0.6 |
| Example 5 | $Cp_2ZrMe_2$ | 0.01 | $[Fc][B(C_6F_5)_4]$ | 0.01 | $i\text{-}Bu_3Al$ | 0.2 |
| Comparative Example 1 | $Cp_2ZrMe_2$ | 0.01 | $[Fc][B(C_6F_5)_4]$ | 0.01 | $i\text{-}Bu_3Al$ | 0.2 |
| Comparative Example 2 | $ZrBz_4$ | 0.03 | $[PhNMe_2H][B(C_6F_5)_4]$ | 0.03 | $i\text{-}Bu_3Al$ | 0.6 |

Table 2

| | Polymerization Step (a) | | | | | |
|---|---|---|---|---|---|---|
| | hydrogen partial pressure ($kg/cm^2G$) | ethylene partial pressure ($kg/cm^2G$) | comonomer amount (ml) | polymerization temperature (°C) | polymerization time (min.) | comonomer proportion (wt%) |
| Example 1 | 2 | 8 | - | 60 | 30 | 60 |
| Example 2 | 2 | 8 | - | 80 | 90 | 50 |
| Example 3 | 2 | 8 | - | 80 | 60 | 55 |
| Example 4 | 2 | 8 | - | 80 | 60 | 60 |
| Example 5 | 2 | 8 | - | 80 | 30 | 60 |
| Comparative Example 1 | - | - | - | - | - | - |
| Comparative Example 2 | - | - | - | - | - | - |

Table 2 (continued)

| | Polymerization Step (b) | | | | | | |
|---|---|---|---|---|---|---|---|
| | hydrogen partial pressure ($kg/cm^2G$) | ethylene partial pressure ($kg/cm^2G$) | comonomer amount (ml) | Polymerization temperature (°C) | Polymerization time (min.) | comonomer proportion (wt%) | Order of polymerization |
| Example 1 | 0 | 5 | 62 | 60 | 10 | 40 | (b) to (a) |
| Example 2 | 0 | 8 | 62 | 80 | 60 | 50 | (b) to (a) |
| Example 3 | 0 | 8 | 62 | 70 | 30 | 45 | (b) to (a) |
| Example 4 | 0 | 5 | 62 | 70 | 30 | 40 | (b) to (a) |
| Example 5 | 0 | 5 | 62 | 60 | 10 | 40 | (a) to (b) |
| Comparative Example 1 | 0 | 5 | 62 | 60 | 10 | 100 | (b) alone |
| Comparative Example 2 | 0 | 8 | 62 | 80 | 30 | 100 | (b) alone |

Table 3

| | Amount of produced polymer (g) | [η] (dl/g) | Density (g/cm³) | FR | Strand appearance[1)] |
|---|---|---|---|---|---|
| Example 1 | 165 | 1.87 | 0.913 | 85 | good |
| Example 2 | 70 | 2.33 | 0.906 | 88 | good |
| Example 3 | 67 | 1.85 | 0.911 | 79 | good |
| Example 4 | 133 | 1.79 | 0.906 | 95 | good |
| Example 5 | 142 | 2.14 | 0.917 | 82 | good |
| Comparative Example 1 | 71 | 1.91 | 0.912 | 24 | melt fracture |
| Comparative Example 2 | 34 | 2.28 | 0.904 | 27 | melt fracture |

Remark 1) Strand appearance was evaluated by extruding a standard at 190°C under a high shear stress by the use of a capillary rheometer and visually observing the appearance of the extruded strand.

## Claims

1. A process for producing an ethylenic polymer composition having a density of 0.88 to 0.94 g/cm$^3$ and an intrinsic viscosity[$\eta$]of 1.5 to 6 dl/g which comprises the multisatage polymerization steps of polymerizing ethylene or copolymerizing ethylene and at least one olefinic comonomer other than ethylene to form (1) an ethylenic polymer having a density of 0.940 g/cm$^3$ or lower and an intrinsic viscosity [$\eta$] of 0.5 to 1.5 dl/g by the use of a catalyst comprising as principal components (A) a transition metal compound, (B) a compound capable of reacting with a transition metal compound to form an ionic complex and (C) an organoaluminum compound as polymerization step (a); and

copolymerizing ethylene and at least one olefinic comonomer other than ethylene to form (2) an ethylenic polymer having a density not higher than that of the ethylenic polymer (1) and an intrinsic viscosity [$\eta$] higher than that of the ethylenic polymer (1) by the use of said catalyst as polymerization step (b), the proportion by weight of the (1) ethylenic polymer to the (2) ethylenic polymer in the ethylenic polymer composition being 30 to 70 : 70 to 30.

**2.** The process according to Claim 1 wherein the order of the step (a) and the step (b) is arbitrary provided that the succeeding step is effected in the presence of the ethylenic polymer produced in the preceding step.

**3.** The process according to Claim 1 wherein the step (a) procedes the step (b).

**4.** The process according to Claim 1 wherein the step (a) follows the step (b).